# EUROPÄISCHE PATENTSCHRIFT

(11) **EP 0 806 575 B1**
(45) Veröffentlichungstag und Bekanntmachung des Hinweises auf die Patenterteilung: **01.12.1999**
(21) Anmeldenummer: 97106667.5
(22) Anmeldetag: 22.04.1997
(51) Int. Cl.: F16B 5/07, F16B 7/22, H02B 1/32

(54) **Befestigungsanordnung**
Fastening device
Dispositif de fixation

(30) Priorität: 06.05.1996 DE 19618127
(43) Veröffentlichungstag der Anmeldung: 12.11.1997
(73) Patentinhaber: Knürr-Mechanik für die Elektronik AG, D-81829 Munchen (DE)
(72) Erfinder: Heckner, Helmut, 84474 Vilshofen (DE)
(74) Vertreter: Heim, Hans-Karl, Dipl.-Ing.

(56) Entgegenhaltungen:
- EP-A- 0 534 578
- EP-A- 0 557 213
- EP-A- 0 668 644
- DE-A- 2 161 889
- DE-U- 9 110 389

## Beschreibung

Die Erfindung betrifft eine Befestigungsanordnung gemäß dem Oberbegriff des Anspruchs 1.

Zum Aufbau von Gestellen, Gehäusen und Schränken, beispielsweise von Geräteschränken nach dem 19"-System, werden vertikal und horizontal angeordnete Bauteile, in der Regel abgelängte Profilholme, zu einer Rahmenkonstruktion verbunden und mit Verkleidungsteilen versehen.

Zur Aufnahme von Drucker- und Tastatureinschüben und ähnlichen Geräten oder elektrischen oder elektronischen Baugruppen werden schienenartige Bauteile, beispielsweise Teleskopschienen, angeordnet. Die Befestigung erfolgt bisher in der Regel mit Befestigungsschrauben, welche mit entsprechend ausgebildeten Muttern in den Bohrungen oder T-Nuten der Holmenprofile zusammenwirken. Die Montage der schienenartigen Bauteile, Flachbleche und ähnlichen Bauteile ist mit einem Zeitaufwand verbunden, der sich beim Aufbau und Umbau eines Geräteschrankes, eines Gestelles und dergleichen nachteilig bemerkbar macht.

Aus der EP 0 557 213 A1 ist eine Anordnung zum Verbinden von zwei flachen, biegesteifen Platten bekannt, welche bei Anordnung an einem Horizontalträger und an einem Querträger zum Aufbau einer Rahmenstruktur dienen können. Innerhalb der einen Platte sind zwei versetzte Parallelabschnitte ausgebildet, welche mit komplementären Fensterausschnitten in der anderen Platte zusammenwirken. Zum Verbinden werden beide Platten derart aneinandergelegt, daß die versetzten Parallelabschnitte durch die Fensterausschnitte ragen und nach einer geradlinigen Bewegung auf dem entsprechenden Plattenbereich klemmend aufliegen. Eine weitere Aussparung ist zur Aufnahme eines Vorsprungs ausgebildet, wodurch die aufeinanderliegenden Platten gegen ein horizontales Verschieben verriegelt sind. Nachteilig ist die zusätzliche Anordnung der zwei Platten an den zu verbindenden Bauteilen sowie deren relativ aufwendige Herstellung. Eine variable Befestigung des ersten Bauteils an dem zweiten Bauteil und eine nachträgliche Änderung der Befestigungsposition ist nicht möglich.

In der EP 0 668 644 A1 ist eine Einrichtung für Elektroinstallationen beschrieben, bei welcher unter anderem Querverstrebungen zwischen jeweils zwei Vertikalholmen angeordnet werden. Die Querverstrebungen sind rahmenartig ausgebildet und werden an einer Längsseite mit Hilfe von zwei Zungen in Löcher des zugehörigen Vertikalholms eingehängt. Die Zungen sind federelastisch ausgebildet, um einer Deformation nach Befestigung der Querverstrebung am zweiten Vertikalholm standzuhalten. Diese Befestigung erfolgt mit wenigstens einer Schraube oder einer Bolzen-Mutter-Verbindung und sichert damit erst die Halterung der Querverstrebung an den zwei Vertikalholmen. Durch die Schraubverbindung gestaltet sich die Befestigung einer Querverstrebung relativ aufwendig.

Der Erfindung liegt die **Aufgabe** zugrunde, eine Befestigungsanordnung zu schaffen, welche bei einem außerordentlich einfachen Aufbau eine Schnellbefestigung eines Konstruktions- oder Bauteils an einem anderen Bauteil in der jeweils erforderlichen Höhe und Positionierung ermöglicht.

Erfindungsgemäß wird die Aufgabe durch die kennzeichnenden Merkmale des Anspruchs 1 gelöst. Vorteilhafte und zweckmässige Ausgestaltungen sind in den Unteransprüchen und in der Figurenbeschreibung enthalten.

Die Erfindung basiert auf dem Grundgedanken, zwei Bauteile miteinander über eine Klemmhalterung zu verbinden und die Klemmhalterung durch Klemmelemente zu erreichen, welche in wenigstens einem Bauteil integriert angeordnet und randseitig angeformt sind. Die Klemmelemente sowie Abstandselemente wirken mit einer Nut, insbesondere einer T-Nut, oder mit einer Lochreihe zusammen, welche alternierende Öffnungen, vorzugsweise Langlöcher und Rundlöcher, aufweist, und sind derart ausgebildet, daß ein Hintergriff, insbesondere an den Rändern der Langlöcher, und eine Anlage, bevorzugt im Bereich der Rundlöcher, bzw. in der Nut erreicht wird. Über die hintergreifenden Klemmelemente und die an oder in Öffnungen anliegenden Abstandselemente wird eine Verklemmung des zu befestigenden Bauteils erreicht, welche insbesondere bei einer einander gegenüberliegenden Verklemmung des zu befestigenden Bauteils keine weiteren zusätzlichen Befestigungselemente für eine sichere und stabile Halterung erfordert.

Ein weiterer Vorteil besteht darin, daß eine außerordentlich schnelle Befestigung möglich ist, da lediglich die randseitig angeformten Klemm- und Abstandselemente in die jeweilige Lochreihe oder T-Nut eingeführt bzw. zur Anlage gebracht werden und durch ein nachfolgendes Verschwenken um etwa 90° verklemmt werden. Ein einseitig eingeklemmtes Konstruktionsteil weist in Befestigungsposition noch einen Schwenkbereich auf, welcher etwa bis 10° beträgt. Sobald ein Bauteil mit beiden Randbereichen in Lochreihen und/ oder T-Nuten der angrenzenden Profile verklemmt ist, ist ein derartiges Spiel nicht mehr vorhanden, sondern eine sichere und stabile Verklemmung und Einspannung zwischen den zwei Profilen gegeben.

Es ist besonders vorteilhaft, wenigstens ein Bauteil der erfindungsgemäßen Befestigungsanordnung mit einem weiteren Bauteil oder Konstruktionsteil, beispielsweise einer Teleskopschiene, zu verbinden, und dadurch eine besonders effiziente Befestigung der Teleskopschiene an einem Bauteil und insbesondere an einem Profilholm, welcher wenigstens eine Lochreihe oder eine Nut oder auch wenigstens eine Lochreihe und wenigstens eine T-Nut aufweist, zu erreichen. Bevorzugt ist mit dem zu befestigenden Konstruktionsteil, beispielsweise der Teleskopschiene, das die Klemm- und Halteelemente aufweisende Bauteil der Befestigungsanordnung verbunden, insbesondere verschraubt. Wenn als zweites Bauteil ein Profilholm eingesetzt wird, kann die Teleskopschiene oder auch eine Seitenwand oder eine sonstige Baugruppe besonders rasch und ohne weitere Hilfsmittel an dem Profilholm fixiert werden.

In Befestigungsstellung liegt das zu befestigende Bauteil nahezu an der Fläche, welche die Lochreihe oder Nut aufweist, an und verläuft somit nahezu rechtwinklig zu der Profilfläche.

In einer bevorzugten Ausbildung sind die Klemmelemente abgewinkelt und hakenartig für einen Hintergriff an Ausnehmungen, Löchern, Bohrungen und dergleichen, insbesondere an den Langlöchern, ausgebildet. Die Abstands- oder Positionierelemente sind gering, z.B. mit einem Neigungswinkel von etwa 10 Grad, abgebogen und endseitig abgerundet für eine Anlage in den Rundlöchern ausgebildet.

Prinzipiell kann ein Hintergriff auch in den Rundlöchern und eine formschlüssige Aufnahme in den Langlöchern realisiert werden. Wesentlich ist das Zusammenwirken der hintergreifenden Klemmhaken und der anliegenden bzw. in den Rundlöchern aufgenommenen Abstandselemente für ein Verklemmen des zu befestigenden Bauteils.

Besonders vorteilhaft für einen Klemmsitz und eine form- und kraftschlüssige Verbindung von zwei Bauteilen ist eine alternierende Anordnung der Klemmhaken und Abstandselemente bzw. der Langlöcher und Rundlöcher, wobei letztere insbesondere als kreisrunde Bohrungen ausgebildet sind.

Eine bevorzugte Ausbildung der erfindungsgemäßen Schnellbefestigung sieht zwei Rundlöcher vor, welche von einem oberen und einem unteren Langloch begrenzt werden. Entsprechend sind an einem zugehörigen zu befestigenden Bauteil zwei Abstandselemente von einem oberen und unteren Klemmhaken begrenzt. Die Rastermaße der Löcher der Lochreihe und der Klemm- und Abstandselemente sind einander angepaßt.

Die Erfindung wird nachstehend anhand einer Zeichnung weiter erläutert; in dieser zeigen in einer stark schematisierten Darstellung
- Fig. 1: eine Ansicht einer zur Befestigung eines Konstruktionselementes eingesetzten erfindungsgemäßen Befestigungsanordnung;
- Fig. 2: einen Schnitt nach Linie II-II gemäß Fig. 1, jedoch ohne Konstruktionselement und
- Fig. 3: einen Schnitt durch eine Befestigungsanordnung analog zur Fig. 2, jedoch in einer T-Nut.

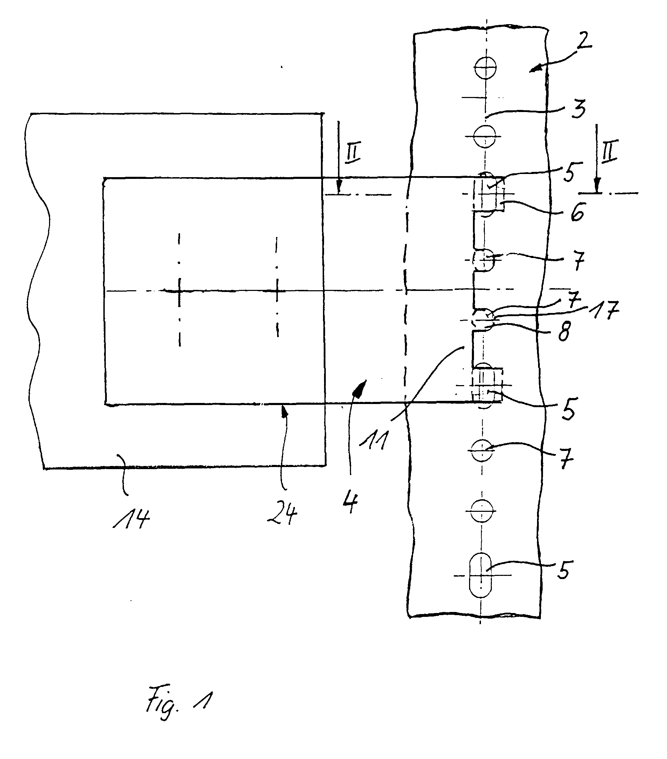

Fig. 1 zeigt als Beispiel für eine erfindungsgemäße Befestigungsanordnung ausschnittsweise ein erstes Bauteil 2, welches ein vertikaler Profilholm eines Geräteschrankes ist, und ein zweites Bauteil 4, welches zur Befestigung eines zu befestigenden Kontruktionselementes 14, beispielsweise einer Teleskopschiene, dient und mit dem Bauteil 2 zu verbinden ist. Der vertikale Profilholm 2, der beispielsweise aus Aluminium oder aus Stahl gefertigt ist, weist in Längsrichtung eine Lochreihe 3 aus rasterartig angeordneten Langlöchern 5 und Rundlöchern 7 auf, wobei zwischen zwei Langlöchen 5 jeweils zwei Rundlöcher 7 ausgebildet sind. Bei den Rundlöchern 7 handelt es sich um kreisrunde Bohrungen.

An dem Profilholm 2 wird das zweite Bauteil 4 befestigt, welches schienenartig oder platten formig ausgebildet ist und an welchem das nur als Ausschnitt dargestellte Konstruktionselement 14, zum Beispiel über Befestigungsschrauben (nicht dargestellt), befestigt ist. Das zweite Bauteil 4 weist einen Randbereich 11 mit integrierten Klemmelementen 6 und Abstandselementen 8 auf. Die Ansicht gemäß Fig. 1 verdeutlicht, daß die Klemmelemente 6 und Abstandselemente 8 des Befestigungselementes 4 komplementär zu den zwei verschiedenen Löchem 5, 7 des vertikalen Profilholms 2 ausgebildet sind und das gleiche Rastermaß wie die Löcher 5, 7 des Vertikalprofils 2 aufweisen.

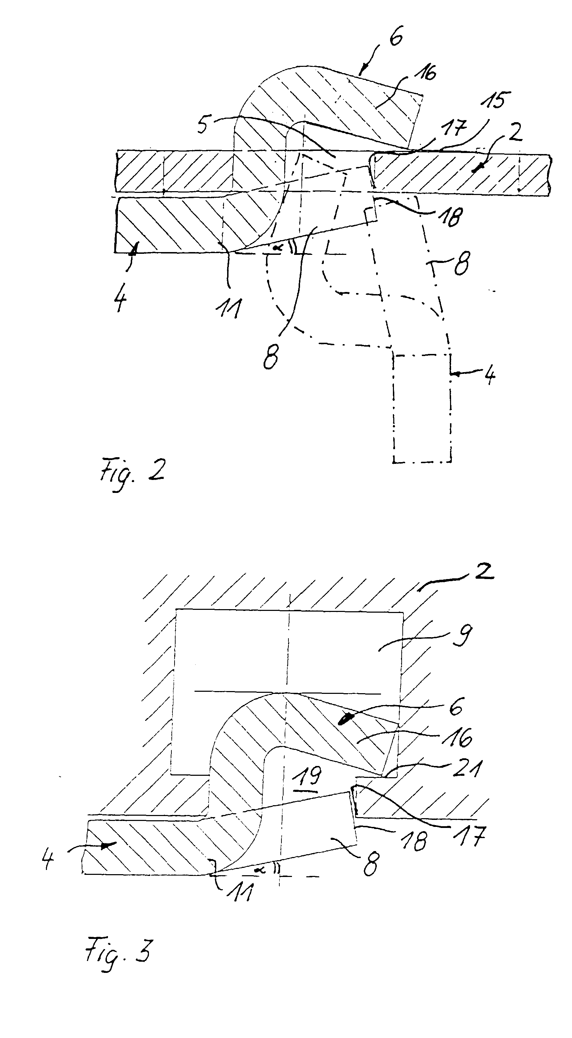

Als Klemmelemente sind Klemmhaken 6 angeformt, welche zum Hintergreifen des Langlochs 5 und zur Anlage an einem rückseitigen Randbereich 15 des Langlochs 5 zweifach abgewinkelt ausgebildet sind (siehe auch Fig. 2 und Fig. 3).

Zur Positionierung im Bereich eines Rundlochs 7, insbesondere mit gleichzeitiger Anlage an einem Randbereich 17 des Rundlochs 7, sind zungenartig ausgebildete Abstandselemente 8 ausgebildet, welche zusammen mit den Klemmhaken 6 aufgrund ihrer Anordnung und Abwinklung bzw. Abschrägung eine Klemmhalterung des Randbereichs 11 bewirken.

Es liegt im Rahmen der Erfindung, abweichende Lochreihen auszubilden und entsprechende Klemm- und Abstandselemente vorzusehen. Auch liegt es im Rahmen der Erfindung, wenn lediglich ein Rundloch oder aber mehr als zwei Rundlöcher zwischen zwei Langlöchern ausgebildet oder weitere alternierende Anordnungen unterschiedlicher Löcher vorgesehen sind, welche mit komplementär ausgebildeten Klemm- und Positionierelementen 6,8 zusammenwirken.

Bevorzugt ist das als Verbindungselement für weitere Bauteile und Konstruktionselemente 14 dienende Bauteil 4 der erfindungsgemäßen Befestigungsanordnung aus einem Stahlblech mit einer Wandstärke von 2,0 mm hergestellt. Die Wandstärke des ersten Bauteils, beispielsweise eines Vertikalholms, kann bei Verwendung eines Aluminiumprofils 1,9 mm und bei Verwendung eines Stahl-Profils 1,5 mm betragen.

Aus Fig. 2 sind die Klemmhalterung und die Schnellbefestigung zu ersehen. Die strichpunktierten Linien geben das zweite Bauteil 4 in einer Position wieder, in welcher die Klemmelemente 6 noch nicht oder nur teilweise in die Langlöcher 5 des Profilholms als erstem Bauteil 2 eingeführt und die Abstandselemente 8 noch nicht endpositioniert sind, sondern am Außenrand der Rundlöcher 7 abgestützt sind. Mit durchgezogenen Linien und strichlierten Linien sind die Klemmposition des zu befestigenden zweiten Bauteils 4 und die Anordnung eines Klemmelementes 6 und eines Abstandselementes 8 in der Klemmposition dargestellt.

Das zweite Bauteil 4 weist integriert angeordnete Klemmhaken 6 und Abstandselemente 8 an einem Randbereich 11 auf. Die Klemmhaken 6 sind an dem Randbereich 11 rechtwinklig abgebogen und mit einem Klemmschenkel 16 versehen, welcher nach innen geneigt ist und den Hintergriff und eine Anlage an einem rückseitigen Randbereich 15 eines Langlochs 5 gewährleistet. Die vertikalen Abmessungen des Klemmhakens 6 sind mit denen des Langlochs 5 abgestimmt. Ein Abstandselement 8 unterhalb des Klemmhakens 6 liegt mit geringem Eingriff in dem Rundloch 7 an und ist mit einer Stirnseite 18 an einem Randbereich 17 des Rundlochs 7 abgestützt. Das Abstandselement 8 ist leicht abgeschrägt am Randbereich 11 ausgebildet. Ein Neigungswinkel α kann etwa 10 Grad betragen.

Analog zur Fig. 2 ist in Fig. 3 eine Klemmhalterung des Bauteils 4 mit einem Randbereich 11 dargestellt. Gleiche Merkmale wurden mit identischen Bezugszeichen versehen. Das zweite Bauteil 4, welches zur Befestigung eines nur in Figur 1 dargestellten Konstruktionselementes 14 vorgesehen ist, wird jedoch im Gegensatz zum Beispiel gemäß Fig. 1 und 2 nicht in einer Lochreihe, sondern in einer T-Nut 9 eines ersten Bauteils 2 befestigt. Für eine variable Befestigung ist es vorteilhaft, wenn das erste Bauteil 2 wenigstens eine T-Nut und gleichzeitig wenigstens eine Lochreihe 3 aufweist.

Ein Klemmschenkel 16 des Klemmhakens 6 liegt an einer Innenseite 21 eines Nutschenkels an und wird zu diesem Zweck durch einen Schlitz 19 der T-Nut 9 geführt. Das Abstandselement 8 liegt an einem Randbereich 17 des Schlitzes 19 der T-Nut 9 an.

Die Abstandselemente 8 sind, wie die Figuren zeigen, wesentlich kürzer ausgebildet als der Klemmhaken 6 und sichern durch eine definierte An- oder Auflage eine genaue Anordnung und Positionierung der Klemmelemente 6 in einer Lochreihe 3 oder einer T-Nut 9.

Der Klemmhaken 6 kann an dem Klemmschenkel 16 und insbesondere an dessen freiem Ende mit kleinen, spitzen Fortsätzen versehen sein, welche sich in die Oberflächenschicht einkrallen.

Die erfindungsgemäße Befestigungsanordnung mit einem ersten und zweiten Bauteil ist zur schnellen und montagefreundlichen Befestigung diverser Baugruppen und Konstruktionsteile einsetzbar und insbesondere zur Befestigung schienenartiger Bauteile, wie Teleskopschienen, in einem Schrank- oder Gestellsystem geeignet.

## Patentansprüche

1. Befestigungsanordnung, mit einem ersten Bauteil (2) und einem zweiten Bauteil (4), welches an dem ersten Bauteil (2) klemmartig fixierbar ist,
dadurch **gekennzeichnet**,
daß das erste Bauteil (2) wenigstens eine Lochreihe (3) aus alternierend angeordneten Langlöchern (5) und Rundlöchern (7) und/oder eine Nut (9) und das zweite Bauteil (4) Klemmelemente (6) für eine Klemmhalterung sowie Abstandselemente (8) zur Anlage im Bereich der Langlöcher (5) und Rundlöcher (7) der Lochreihe (3) oder in der Nut (9) des ersten Bauteils (2) aufweist,
daß die Klemmelemente (6) und Abstandselemente (8) randseitig an dem zweiten Bauteil (4) angeordnet sind und
daß das zweite Bauteil (4) nach Einführung der Klemmelemente (6) und Abstandselemente (8) in die Lochreihe (3) oder in die Nut (9) und nach einer Drehung an dem ersten Bauteil (2) fixiert ist.

2. Befestigungsanordnung nach Anspruch 1,
dadurch **gekennzeichnet**,
daß die Klemmelemente (6) für einen Hintergriff der Langlöcher (5) oder der Nut (9) und die Abstandselemente (8) für eine Anlage an oder eine partielle Aufnahme in den Rundlöchern (7) oder in der Nut (9) ausgebildet sind.

3. Befestigungsanordnung nach Anspruch 1 oder 2,
dadurch **gekennzeichnet**,
daß das erste Bauteil (2) ein Profilholm ist und in Längsrichtung als Lochreihe (3) eine rasterartige und alternierende Anordnung von wenigstens einem Rundloch (7) und einem Langloch (5) und als Nut eine T-Nut (9) aufweist.

4. Befestigungsanordnung nach einem der vorhergehenden Ansprüche,
dadurch **gekennzeichnet**,
daß das zweite Bauteil (4) in ein Konstruktionsteil (14) integriert oder an diesem befestigt ist und wenigstens einen Randbereich (11) mit Klemmelementen (6) und den Abstandselementen (8) aufweist, welche bei einem ersten Bauteil (2) mit Lochreihe komplementär zu der Lochreihe (3) ausgebildet sind.

5. Befestigunganordnung nach Anspruch 4,
dadurch **gekennzeichnet**,
daß das zweite Bauteil (4) bei Befestigung an einem Flachblech oder einer Profilschiene als Konstruktionsteil (14) an einem randseitigen Befestigungsbereich (24) des Konstruktionsteils (14) angeordnet ist und der Randbereich (11) mit den Klemmelementen (6) und Abstandselementen (8) übersteht.

6. Befestigungsanordnung nach Anspruch 4 oder 5,
dadurch **gekennzeichnet**,
daß zur Befestigung eines Konstruktionsteils (14) an zwei einander gegenüberliegenden Befestigungsbereichen (24) jeweils ein zweites Bauteil (4) am Konstruktionsteil angeordnet und insbesondere über Schraubverbindungen befestigt ist.

7. Befestigungsanordnung nach einem der vorhergehenden Ansprüche,
dadurch **gekennzeichnet**,
daß das zweite Bauteil (4) als Klemmelemente Klemmhaken (6) aufweist, welche zum Hintergreifen eines Langloches (5) oder einer Nut (9) ausgebildet sind, und daß die Abstandselemente (8) zungenförmig und zur formschlüssigen Anlage an oder in einem Rundloch (7) oder einem Schlitz (19) der Nut (9) ausgebildet sind.

8. Befestigungsanordnung nach Anspruch 7,
dadurch **gekennzeichnet**,
daß die Klemmhaken (6) durch eine zweifache Abwinklung gebildet sind und jeweils mit einem abgeschrägten Klemmschenkel (16) in Klemmposition einen Randbereich (15) der Langlöcher (5) hintergreifen oder an einer Innenseite (21) der Nut (9) anliegen und
daß die Abstandselemente (8), welche komplementär zu den Rundlöchern (7) oder zum Nutschlitz (19) ausgebildet sind, in Richtung Klemmhaken (6) abgebogen sind und in Klemmposition an einem Randbereich (17) der Rundlöcher (7) oder des Nutschlitzes (14) anliegen.

9. Befestigungsanordnung nach Anspruch 8,
dadurch **gekennzeichnet**,
daß wenigstens die Klemmhaken (6) im Bereich ihrer Klemmschenkel (16) mit spitzen Fortsätzen versehen sind, die sich in das erste Bauteil (2) einkrallen.

10. Befestigungsanordnung nach einem der vorhergehenden Ansprüche,
dadurch **gekennzeichnet**,
daß das zweite Bauteil (4) mit den Klemmelementen (6) und Abstandselementen (8) in einer nahezu rechtwinkligen Anordnung in die Lochreihe (3) oder in die Nut (9) des ersten Bauteils (2) einführbar und nach einer etwa 90°-Drehung durch ein Hintergreifen der Lochreihe (3) oder der Nut (9) in eine Klemmstellung bringbar und mit dem ersten Bauteil (2) verbunden ist.

## Claims

1. Fixing system comprising a first component (2) and a second component (4), which can be fixed in clamp-like manner to the first component (2),
**characterized** in that
the first component (2) has at least one row of holes (3) of alternating elongated holes (5) and round holes (7) and/or a groove (9) and the second component (4) has clamping elements (6) for clamping retention as well as spacing elements (8) for engagement in the area of the elongated holes (5) and round holes (7) or in the groove (9) of the first component (2),
that the clamping elements (6) and spacing elements (8) are located at a margin on the second component (4), and
that the second component (4) is fastened to the first component (2) after introducing the clamping elements (6) and spacing elements (8) into the row of holes (3) or into the groove (9) and after a rotation.

2. Fixing system according to claim 1,
**characterized** in that
the clamping elements (6) are constructed for a back-grip of the elongated holes (5) or of the groove (9) and the spacing elements (8) for an engagement at or partial reception in the round holes (7) or in the groove (9).

3. Fixing system according to claim 1 or 2,
**characterized** in that
the first component (2) is a sectional strut and in longitudinal direction as the row of holes (3) is provided a raster-like and alternating arrangement of at least one round hole (7) and one elongated hole (5) and as the groove a T-groove (9).

4. Fixing system according to one of the preceding claims,
**characterized** in that
the second component (4) is integrated or fixed to a structural part (14) and has at least one marginal area (11) with clamping elements (6) and spacing elements (8) which in the case of a first component (2) with row of holes are constructed in complementary manner to the row of holes (3).

5. Fixing system according to claim 4,
**characterized** in that
in the case of fastening the second component (4) on a flat plate or a sectional rail as structural part (14) the second component (14) is positioned on a marginal fixing area (24) of the structural part (14) and the marginal area (11) with the clamping elements (6) and spacing elements (8) stands out.

6. Fixing system according to claim 4 or 5,
**characterized** in that
for fixing a structural part (14) in each case a second component (4) is positioned at and is fastened to the structural part (14) of two facing fixing areas (24), particularly by screw connections.

7. Fixing system according to one of the preceding claims,
**characterized** in that
the second component (4) has as clamping elements clamping hooks (6) which are constructed for backgripping of an elongated hole (5) or a groove (9), and that the spacing elements (8) are constructed in tongue-like manner and for positive engagement on or in a round hole (7) or a slit (19) of the groove (9).

8. Fixing system according to claim 7,
**characterized** in that
the clamping hooks (6) are formed by a double bend and in clamping position each of the clamping hooks (6) grips back with a bevelled clamping leg (16) a marginal area (15) of the elongated holes (5) or engages on an inner side (21) of the groove (9), and
that the spacing elements (8) which are constructed in complementary manner to the round holes (7) or to the slit (19) of the groove (9) are bent towards the clamping hooks (6) and in clamping position engage on a marginal area (17) of the round holes (7) or of the slit (19) of the groove (9).

9. Fixing system according to claim 8,
**characterized** in that
at least the clamping hooks (6) in the vicinity of their clamping legs (16) are provided with pointed extensions which engage in the first component (2).

10. Fixing system according to one of the preceding claims,
**characterized** in that
the second component (4) with the clamping elements (6) and spacing elements (8) can be inserted in a virtually right-angled arrangement into the row of holes (3) or into the groove (9) of the first component (2) and following an approximately 90° rotation can be brought into a clamping position by a back-grip of the row of holes (3) or the groove (9) and is fixed to the first component (2).

## Revendications

1. Dispositif de fixation, avec un premier composant (2) et un deuxième composant (4) qui peut se fixer de manière bloquante sur le premier composant (2), ***caractérisé en ce que*** le premier composant (2) présente au moins une série de trous (3) composée de trous oblongs (5) et de trous ronds (7) disposés en alternance et/ou une rainure (9) et le deuxième élément (4) présente des éléments de blocage (6) pour un maintien bloquant, ainsi que des éléments d'écartement (8) pour un appui au niveau des trous oblongs (5) et des trous ronds (7) de la série de trous (3) ou dans la rainure (9) du premier composant (2), ***en ce que*** les éléments de blocage (6) et les éléments d'écartement (8) sont placés au niveau du bord sur le deuxième composant (4), et ***en ce que*** le deuxième composant (4) est fixé après introduction des éléments de blocage (6) et des éléments d'écartement (8) dans la série de trous (3) ou dans la rainure (9) et après une rotation sur le premier composant (2).

2. Dispositif de fixation selon la Revendication 1, ***caractérisé en ce que*** les éléments de blocage (6) sont conformés pour saisir par derrière les trous oblongs (5) ou la rainure (9) et les éléments d'écartement (8) pour s'appuyer contre, ou se loger partiellement dans, les trous oblongs (7) ou la rainure (9).

3. Dispositif de fixation selon la Revendication i ou 2, ***caractérisé en ce que*** le premier composant (2) est une barre profilée et présente, dans la direction longitudinale, comme série de trous (3), une disposition alternée et en réseau d'au moins un trou rond (7) et un trou oblong (5) et, comme rainure, une rainure en T (9).

4. Dispositif de fixation selon l'une quelconque des Revendications précédentes, ***caractérisé en ce que*** le deuxième composant (4) est intégré dans un élément de structure (14) ou fixé à celui-ci et présente au moins une zone de bord (11) avec des éléments de blocage (6) et les éléments d'écartement (8), lesquels sont conformés, dans le cas d'un premier composant (2), avec une série de trous, d'une manière complémentaire à la série de trous (3).

5. Dispositif de fixation selon la Revendication 4, ***caractérisé en ce que*** le deuxième composant (4), en cas de fixation contre une tôle plate ou un rail profilé servant d'élément de structure (14), est placé sur une zone de fixation côté bord (24) de l'élément de structure (14) et la zone de bord (11) forme saillie avec les éléments de blocage (6) et d'écartement (8).

6. Dispositif de fixation selon la Revendication 4 ou 5, ***caractérisé en ce que,*** pour la fixation d'un élément de structure (14) contre deux zones de fixation opposées (24), à chaque fois un deuxième composant (4) est placé sur l'élément de structure et est fixé en particulier par des vissages.

7. Dispositif de fixation selon l'une quelconque des Revendications précédentes, ***caractérisé en ce que*** le deuxième composant (4) présente comme éléments de blocage des crochets de blocage (6) qui sont conformés pour saisir par l'arrière un trou oblong (5) ou une rainure (9), et ***en ce que*** les éléments d'écartement (8) sont en forme de languette et sont conformés pour s'appuyer en engagement positif contre ou dans un trou rond (7) ou une fente (19) de la rainure (9).

8. Dispositif de fixation selon la Revendication 7, ***caractérisé en ce que*** les crochets de fixation (6) sont formés par un double coude et à chaque fois saisissent par l'arrière, dans la position de blocage, une zone de bord (15) des trous oblongs (5) avec une branche coudée inclinée (16) ou s'appuient contre une face intérieure (21) de la rainure (9), et ***en ce que*** les éléments d'écartement (8), qui sont conformés complémentaires des trous ronds (7) ou de la fente de rainure (19), sont recourbés en direction des crochets de blocage (6) et, en position de blocage, s'appuient contre une zone de bord (17) des trous ronds (7) ou de la fente de rainure (19).

9. Dispositif de fixation selon la Revendication 8, ***caractérisé en ce*** qu'au moins les crochets de blocage (6) sont munis au niveau de leurs branches de blocage (16) de prolongements pointus (16), qui s'agrippent dans le premier composant (2).

10. Dispositif de fixation selon l'une quelconque des Revendications précédentes, ***caractérisé en ce que*** le deuxième composant (4), avec les éléments de blocage (6) et d'écartement (8) dans une disposition quasi perpendiculaire, peut s'introduire dans la série de trous (3) ou dans la rainure (9) du premier composant (2) et, après une rotation d'environ 90°, peut être amené dans une position de blocage en saisissant par l'arrière la série de trous (3) ou la rainure (9) et est relié au premier composant (2).
